# EUROPEAN PATENT APPLICATION

(11) **EP 1 047 250 A1**
(43) Date of publication of application: **25.10.2000**
(21) Application number: 99108111.8
(22) Date of filing: 24.04.1999
(51) Int. Cl.: H04M 1/60, H04M 1/02

(54) **A device for controlling the microphone output level in a telephone handset**

(71) Applicant: ROBERT BOSCH GMBH, 70442 Stuttgart (DE)
(72) Inventor: Jensen, Clemen Boje, DK-9000 Aalborg (DK)

(57) **Abstract**

The present invention provides a device for controlling the microphone output level in a telephone handset, said handset including a housing with an operating face which may be covered fully or partly by sliding movement of a cover, said microphone being arranged in said cover and the speaker being arranged on said operating face; said cover including a plurality of conductors extending in the direction of the sliding movement, which are contacted by respective contacts in the housing for electrical connecting said microphone to electrical components in said housing; wherein said conductors being arranged such that the electrical resistance between said microphone and at least one of said contacts varies with varying distance between said microphone and said speaker, whereby the microphone output level is controlled by said varying resistance.

## Description

### BACKGROUND OF THE INVENTION

The present invention relates to a device for controlling the microphone output level in a telephone handset, said handset including a housing with an operating face which may be covered fully or partly by sliding movement of a cover, said microphone being arranged in said cover and the speaker being arranged on said operating face; said cover including a plurality of conductors extending in the direction of the sliding movement, which are contacted by respective contacts in the housing for electrical connecting said microphone to electrical components in said housing.

EP-A-0,792,055 discloses a portable telephone with a slidable cover, a microphone arranged in the slidable cover, and an operating face which may be covered fully or partly by sliding movement of the cover. The microphone in the cover is electrically connected to electric parts in a telephone housing via a sliding contact. The sliding contact is constructed as a connector means in the form of slide shoes cooperating with a plurality of conductors extending in the direction of the sliding movement.

Although applicable to any telephone system, the present invention and its underlying problems will be discussed with particular reference to digital mobile systems such as GSM, UMTS, DECT, PHS etc.

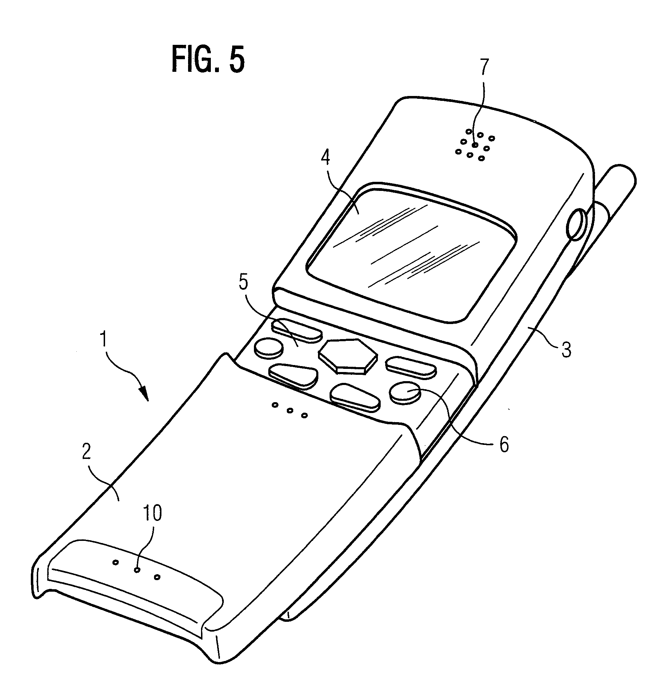

Fig. 5 schematically shows a known portable telephone with the slidable cover partly covering its operating face.

The telephone 1 shown in Fig. 5 has a microphone 10 arranged in a slidable cover 2, and an operating face 5, which may be covered fully or partly by said slidable cover 2. The inner side of the cover 2 is formed with a pair of metallic conductors which are connected to the microphone 10 on one side and which extend in the direction of the sliding movement of the cover 2. The housing 3 of the telephone 1 has respective contacts for electrically connecting said conductors and therefore said microphone to electrical components arranged in said housing 3. Usually, said contacts are in the form of resilient slide shoes.

The housing 3 and the cover 2 of the telephone are usually made of plastics, and the conductors are usually made of a flexible printed circuit board. Moreover, reference sign 4 denotes a display, reference sign 6 denotes a push-button of the operating face, and reference sign 7 denotes a speaker.

The technical problem in such a telephone with variable distance between the speaker and the microphone is that the microphone output increases when the distance is increased, since the microphone is moved closer to the sound source, i.e. the mouth of the operator. Another problem is that the side tone level will also increase when the distance is increased.

### SUMMARY OF THE INVENTION

The present invention provides a device for controlling the microphone output level in a telephone handset as defined in independent claims 1 and 5, respectively.

The principal idea of the present invention is that the microphone output level is regulated or controlled by means of a variable resistor included in the sliding mechanism. Thus, the present invention can be applied to any telephone of the initially defined type that has a variable distance between the speaker and the microphone and can be used in two or more positions.

In the device defined in claim 1, the resistance control is realized directly in the microphone connection. In the device defined in claim 15, the resistance control is realized indirectly over a voltage divider provided in the sliding mechanism and a control circuit for controlling the microphone output circuit.

Particular advantages of the present invention are the following. The microphone output can be regulated continuously as well as discrete as a function of the position, i.e. the distance between the microphone and the speaker. This gives optimum performance of the telephone, since the microphone output can be made constant. In other words, the Sending Loudness Rating (SLR) can be held constant. The side tone level is also regulated as a function of the position, when the microphone gain is regulated. This means that the Side Tone Masking Rating (STMR) can also be held constant. The influence of the background noise is lowered, when the distance is increased, since the microphone gain is reduced. This improves the Listener Side Tone Rating (LSTR). A lower acoustical coupling between the speaker and the microphone is achieved compared to the effect from increasing the distance alone. Again the reason is that the microphone gain is reduced at the same time. This increases the stability margin and Echo Loss (EL).

Since the microphone gain can be controlled as a function of the position, the SLR and STMR values can be held within the specified limit of the telephone standards, such as GSM 03.50 and DECT TBR 10, which may be impossible without regulating the gain.

The gain regulation may be implemented with only two conductors to the microphone and its circuit. The gain regulation can be implemented using only passive components.

Thus, is is easy implementable. It is a small size implementation and a low cost solution.

Preferred embodiments of the present invention are listed in the dependent claims.

According to a preferred embodiment, said conductors are arranged such that the electrical resistance between said microphone and at least one of said contacts increases with increasing distance between said microphone and said speaker and vice versa.

According to a further preferred embodiment, one or more gaps are provided in at least one conductor, which gaps are bridged by a respective resistor arranged adjacent to said conductor such that the electrical resistance between said microphone and the corresponding contact varies stepwisely when crossing said respective gap.

According to a further preferred embodiment, at least one conductor is of a material which is selected such that the electrical resistance between said microphone and the corresponding contact varies continuously.

According to a further preferred embodiment, said pair of conductors is arranged such that the electrical resistance between said first contact and said second contact increases with increasing distance between said microphone and said speaker and vice versa.

According to a further preferred embodiment, one or more gaps are provided in at least one conductor of said pair of conductors, which gaps are bridged by a respective resistor arranged adjacent to said conductor such that the electrical resistance between said first contact and said second contact varies stepwisely when crossing said respective gap.

According to a further preferred embodiment, at least one conductor of said pair of conductors is of a material which is selected such that the electrical resistance between said first contact and said second contact varies continuously.

### BRIEF DESCRIPTION OF THE DRAWINGS

The present invention will become more fully understood by the following detailed description of preferred embodiments thereof in conjunction with the accompaying drawings, in which:
- Fig. 1a-c: schematically a portable telephone having an embodiment of the device for controlling the microphone output level according to a first embodiment of the invention;
- Fig. 2: a circuit diagram for explaining the electrical function of the first embodiment shown in Fig. 1a-c;
- Fig. 3a-c: schematically a portable telephone having an embodiment of the device for controlling the microphone output level according to a second embodiment of the invention;
- Fig. 4: a circuit diagram for explaining the electrical function of the second embodiment shown in Fig. 3a-c; and
- Fig. 5: schematically a known portable telephone with the slidable cover partly covering its operating face.

### DESCRIPTION OF THE PREFERRED EMBODIMENTS

Throughout the figures, the same reference signs denote the same or equivalent parts.

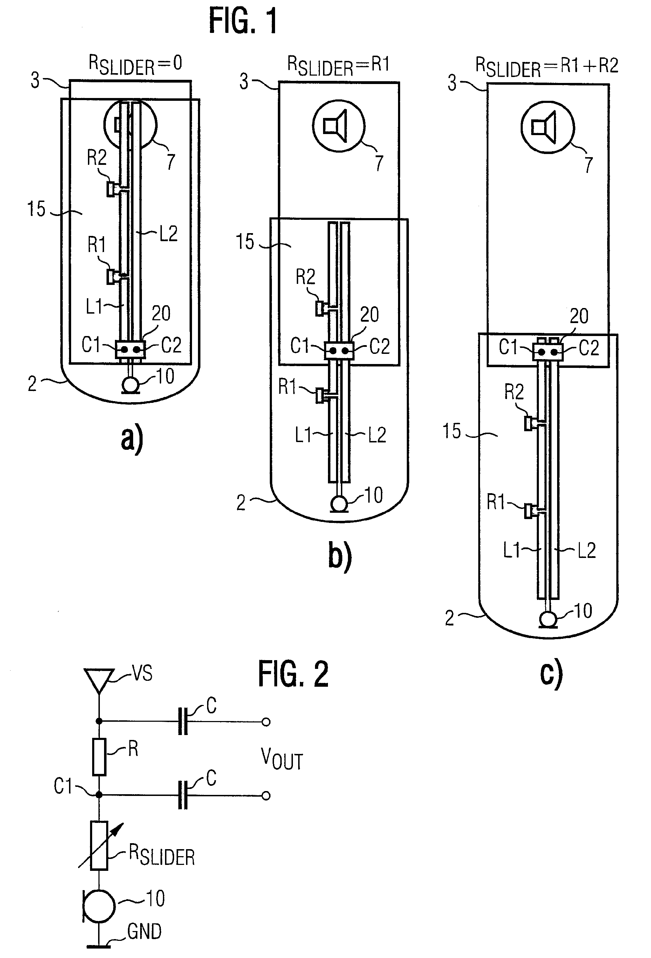

Fig. 1a-c schematically show a portable telephone having an embodiment of the device for controlling the microphone output level according to a first embodiment of the invention.

In Fig. 1a-c L1, L2 denote respective conductors; R1, R2 denote respective resistors bridged over a corresponding gap of said conductors; C1, C2 denote respective contacts in a contact region 20, and 15 denotes a flexible printed circuit board where the conductors are formed. R_{SLIDER} denotes the resistance which can be measured between the contact C1 and the microphone terminal connected to L1.

In Fig. 1a, the cover 2 is closed, and therefore R_{SLIDER} = 0. In Fig. 1b, the cover 2 is partially opened, and the resistance R_{SLIDER} = R1. In Fig. 1c, the cover 2 is fully opened such that R_{SLIDER} = R1 + R2.

Thus, in this first embodiment, the two resistors R1, R2 are added to the conductor L1 in such a way that the conductor resistance to be measured between the contact C1 and the microphone terminal connected to L1 is increased stepwisely when the distance between the speaker 7 and the microphone 10 is increased. Here, the two resistors R1, R2 are discrete devices for the discrete increment of the resistance. Alternatively, one or both of the conductors could be made of a material which increases its resistance, when the length is increased. This would result in a continuous increment of the resistance between the contact C1 and the microphone terminal connected to L1.

Fig. 2 is a circuit diagram for explaining the electrical function of the first embodiment shown in Fig. 1a-c.

In Fig. 2, R_{SLIDER} is illustrated as a variable resistance which is located between contact C1 and the high side lead of the microphone 10, the low side lead being connceted to ground GND. Moreover, in Fig. 2, VS denotes a voltage source, C denotes respective capacitances, R denotes a resistor and V_{OUT} denotes the output voltage of the microphone output circuit which is directly influenced by the magnitude of the resistance of the variable resistor R_{SLIDER}. Accordingly, the microphone output level which is proportional to the output voltage of the microphone 10 can be directly attenuated by varying the position of the cover 2.

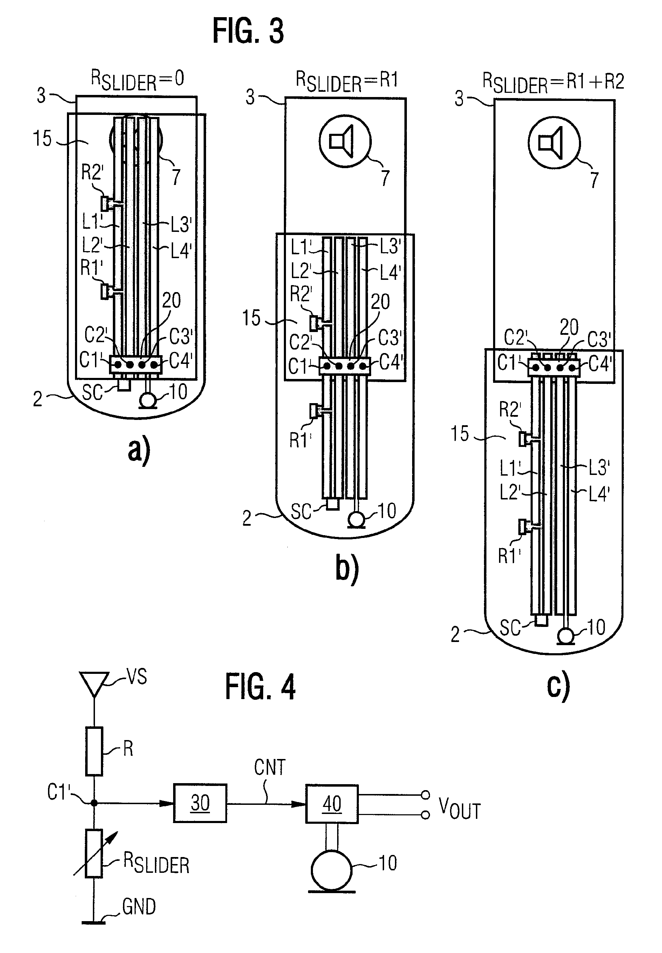

Fig. 3a-c schematically show a portable telephone having an embodiment of the device for controlling the microphone output level according to a second embodiment of the invention.

According to the second embodiment shown in Fig. 3a-c, an extra set of conductors L1', L2' is added to the conductors L3', L4' which connect the microphone to its output circuit. The corresponding contacts are labelled C1', C2', C3', C4'.

In the extra set of conductors L1', L2' the resistance is increased when the distance between the speaker 7 and the microphone 10 is increased, namely the cover 2 is pulled out. The microphone 10 itself is directly connected to its microphone output circuit by means of conductors L3', L4', for example as shown in Fig. 2 without the resistor R_{SLIDER}.

Particularly, the pair of conductors L1', L2' is short-circuited at one end at the position SC. Thus, the resistance measured between contact C1' and C2' changes dependent on the position of the cover 2. In the position shown in Fig. 3a, R_{SLIDER} = 0, in the position shown in Fig. 3b, R_{SLIDER} = R1, and in the position of Fig. 3c, R_{SLIDER} = R1 + R2. As in the case of the first embodiment, one or both of the conductors L1', L2' could alternatively be made of a material which shows an increased resistance when the length is increased. This would result in a continuous increment of the resistance.

In this embodiment, the resistance between contact C1 and C2 called R_{SLIDER} is variable and is used as a part of a voltage divider circuit which indirectly controls the microphone output circuit.

This voltage divider circuit is shown in Fig. 4, wherein the signal coming from contact C1' is fed into a control circuit 30 for generating a control signal CNT to be applied to the microphone output circuit in order to control the microphone output voltage or power V_{OUT}.

Thus, the output voltage V_{OUT} will increase with increasing distance between the speaker 7 and the microphone 10. In other words, in this embodiment, the microphone output level is controlled indirectly with the control signal CNT, which for example may be applied in order to control the resistance of the resistor R shown in Fig. 2.

Although the present invention has been described with respect to preferred embodiments thereof, it should be understood that many modifications can be performed without departing from the scope of the invention as defined by the appended claims.

Particularly, although for the explained geometry of the handset, the microphone output level has to be decreased with increasing distance, also a geometry is conceivable where the microphone output level has to be increased with increasing distance.

## Claims

1. A device for controlling the microphone output level in a telephone handset, said handset including a housing with an operating face which may be covered fully or partly by sliding movement of a cover, said microphone being arranged in said cover and the speaker being arranged on said operating face; said cover including a plurality of conductors extending in the direction of the sliding movement, which are contacted by respective contacts in the housing for electrical connecting said microphone to electrical components in said housing;
wherein
said conductors being arranged such that the electrical resistance between said microphone and at least one of said contacts varies with varying distance between said microphone and said speaker, whereby the microphone output level is controlled by said varying resistance.

2. The device according to claim 1, wherein said conductors are arranged such that the electrical resistance between said microphone and at least one of said contacts increases with increasing distance between said microphone and said speaker and vice versa.

3. The device according to claim 1 or 2, wherein one or more gaps are provided in at least one conductor, which gaps are bridged by a respective resistor arranged adjacent to said conductor such that the electrical resistance between said microphone and the corresponding contact varies stepwisely when crossing said respective gap.

4. The device according to claim 1 or 2, wherein at least one conductor is of a material which is selected such that the electrical resistance between said microphone and the corresponding contact varies continuously.

5. A device for controlling the microphone output level in a telephone handset, said handset including a housing with an operating face which may be covered fully or partly by sliding movement of a cover, said microphone being arranged in said cover and the speaker being arranged on said operating face; said cover including a plurality of conductors extending in the direction of the sliding movement, which are contacted by respective contacts in the housing for electrical connecting said microphone to electrical components in said housing; said device comprising:
a pair of conductors short-circuited at one end extending in the direction of the sliding movement, which are contacted by a respective pair of contacts in the housing;
a first potential source for providing a first potential to one of said pair of conductors via the respective first contact;
a second potential source for providing a second potential to the other one of said pair of conductors via the respective second contact;
said pair of conductors forming a variable voltage divider and being arranged such that the electrical resistance between said first contact and said second contact varies with varying distance between said microphone and said speaker; and
an microphone output level controlling means for controlling the microphone output level by detecting the potential at said first contact and generating a corresponding control signal to be applied to the microphone output circuit.

6. The device according to claim 5, wherein said pair of conductors is arranged such that the electrical resistance between said first contact and said second contact increases with increasing distance between said microphone and said speaker and vice versa.

7. The device according to claim 5 or 6, wherein one or more gaps are provided in at least one conductor of said pair of conductors, which gaps are bridged by a respective resistor arranged adjacent to said conductor such that the electrical resistance between said first contact and said second contact varies stepwisely when crossing said respective gap.

8. The device according to claim 5 or 6, wherein at least one conductor of said pair of conductors is of a material which is selected such that the electrical resistance between said first contact and said second contact varies continuously.

9. A telephone handset including the device according to at least one of the preceeding claims.

10. The telephone handset according to claim 9, being a digital mobile system.
